# EUROPEAN PATENT SPECIFICATION

(11) **EP 0 706 961 B1**
(45) Date of publication and mention of the grant of the patent: **12.08.1998**
(21) Application number: 95202530.2
(22) Date of filing: 19.09.1995
(51) Int. Cl.: B65G 51/06

(54) **Cartridge for application in a pneumatic dispatch conduit system**
Kassette zur Verwendung in einem pneumatischen Rohrpostsystem
Cartouche pour l'application dans un système de conduits à distribution pneumatique

(30) Priority: 12.10.1994 NL 9401684
(43) Date of publication of application: 17.04.1996
(73) Proprietor: Ergotrans B.V., 7336 AL Apeldoorn (NL)
(72) Inventor: Rijken, Jacobus, NL 8171 EB Vaassen (NL)
(74) Representative: Voncken, Bartholomeus Maria Christiaan

(56) References cited:
- WO-A-84/00945
- DE-A- 3 313 676

## Description

The invention relates to a cartridge for application in a pneumatic dispatch conduit system as defined by the preamble of claim 1.

In a known cartridge the closable access opening is defined by a cover which can be screwed onto the end of the cylindrical body. When the cartridge is removed from the pneumatic dispatch conduit system the cover can be unscrewed and the contents of the cartridge can be removed, or objects to be transported can be put into the cartridge. Such cartridges are meant for a manual operation during loading and unloading.

The state of the art according to the preamble of the main claim is represented by WO-A-84.00945. This document shows a cartridge, the access opening of which is closed by an internal closing member spring-loaded towards its closure position. An opening member, which may be a filing tube, is introduced into the access opening and engages the closing member while pushing it towards its opening position.

Now it is an object of the invention to provide an improved cartridge which is fit for application in a system with automatized loading and automatized unloading.

Thus the cartridge according to the invention is characterized in accordance with the characterizing portion of claim 1. Now opening and closing of the cartridge is carried out in an easy manner, because the segment closing the access opening is automatically and without the need for extra means pivoted towards the opening position by said means when the cartridge is positioned at the end of the pneumatic dispatch conduit system. A cartridge carried out in this way may then be applied advantageously in a pneumatic dispatch system comprising automatized loading and unloading devices for the cartridges.

Several measures may be taken for automatically pivoting the segment towards the opening position. In accordance with a preferred embodiment of the cartridge according to the invention the at least one segment is spring-loaded towards its opening position. Thus said means comprise spring means which try to pivot the segment towards its opening position. As long as the cartridge is positioned in the pneumatic dispatch conduit system the walls of this conduit system prevent the pivotal movement of the segment from its closure position towards its opening position; however, when the cartridge with its respective end is free from the pneumatic dispatch conduit system (and thus is positioned at an end of the pneumatic dispatch conduit system) and the segment does no longer engage the wall of the conduit system, the spring means can pivot the segment towards the opening position.

The segment can pivot in different ways from its closure position towards its opening position and vice versa. However, in an extremely handy embodiment according to the invention the cartridge is characterized in that the at least one segment is pivotable about a pivot-axis extending transversally to the longitudinal axis of the cylindrical body and being substantially tangent to the circumference thereof. Again, the segment will automatically pivot from the closure position towards the opening position when the cartridge has reached an end of the pneumatic dispatch conduit system. Due to the mentioned special positioning of the pivot-axis of the segment however also an automatic pivoting of the segment from the opening position towards the closure position will be caused when the cartridge moves into the pneumatic dispatch conduit system. Then the end of the pneumatic dispatch conduit system engages the wall of the respective segment, such that the segment, while pivoting about the pivot-axis, is pivoted inwardly.

Also other positions of the pivot-axis are conceivable, for example a positioning of the pivot-axis in parallel with the longitudinal axis of the cylindrical body and being substantially tangent to the circumference thereof. In such a case however the end of the pneumatic dispatch conduit system cannot automatically pivot the segment from the opening position towards the closure position when the cartridge moves into the pneumatic dispatch conduit system. Therefore such an embodiment is but slightly preferred.

In accordance with another preferred embodiment of the cartridge according to the invention the access opening is provided with at least two segments which, in the closure position, engage each other. As a result of the provision of two segments instead of one single segment a large access opening can be realized while applying relatively small segments. These segments comprise a low weight and can be pivoted simply, without the need of excessive forces.

Of course it is possible too that the access opening is defined by more than two segments.

If, as mentioned before, at least two segments are applied it is possible that these together define a cylindrical shape. Then generally the segments are shaped symmetrically, which makes the production of the cartridge according to the invention easier and cheaper.

Further a special embodiment of the cartridge according to the invention is mentioned, wherein the edges of the segments which in the closure position engage each other and/or engage the cylindrical body comprise a labyrinth sealing. Due to such a labyrinth sealing a proper closure of the cartridge in the closure position is guaranteed.

The cartridge according to the invention is not limited to cartridges which only at one end are provided with a closable access opening. It is possible too that a cartridge comprises at both its ends an access opening provided with at least one pivotable segment. This pivotable segment can show all the embodiments described before.

For the ease of use of the cartridge it can be of advantage when it comprises at least one abutment means for defining the end position of the cartridge at an end of the pneumatic dispatch conduit system. This abutment means can cooperate with a counter-abutment provided in the pneumatic dispatch conduit system, such that the position of the cartridge is exactly defined. In this end position of the cartridge each segment can pivot from its closure position towards its opening position. At the present already systems are marketed which are capable of defining the end position of the cartridges at an end of the pneumatic dispatch conduit system, such as systems comprising pairs of opposed driving belts which relative to each other are positioned in a V-shape. Because such systems are already known a detailed description is omitted here.

Finally an embodiment of the cartridge according to the invention is mentioned, according to which it comprises internal clamping means for clamping objects to be received such as for example a paper clip for bank notes. Especially it is possible that the clamping means can be activated by the at least one segment. For example in the closure position the clamping means can be activated and clamp the objects to be received, whereas in the opening position the clamping means can disengage the objects to be received.

Previously, as an example of means for automatically pivoting the segments towards the opening position an embodiment has been described according to which the segment is spring-loaded towards its opening position. However it is possible too that the segment is pivotable between its closure position and its opening position (and vice versa) through other means. Such means can be of any kind, such as mechanical, electrical, hydraulic, etc. By way of example an embodiment is mentioned according to which each segment is provided with an abutment-boss which cooperates with a counter element in the pneumatic dispatch conduit system, such that through a cooperation between both elements a pivoting motion of the segment can occur.

Hereinafter the invention will be elucidated referring to the drawing, in which an embodiment of the cartridge according to the invention is illustrated.
Fig. 1 shows in a side elevational view an embodiment of the cartridge according to the invention in the opening position;
fig. 2 shows the cartridge according to fig. 1 in the closure position;
fig. 3 shows an end of a pneumatic dispatch conduit system with a cartridge according to the invention partially received therein, said cartridge being in its opening position; and
fig. 4 shows in correspondence with fig. 3 a pneumatic dispatch conduit system with a cartridge fully received therein and being in its closure position.

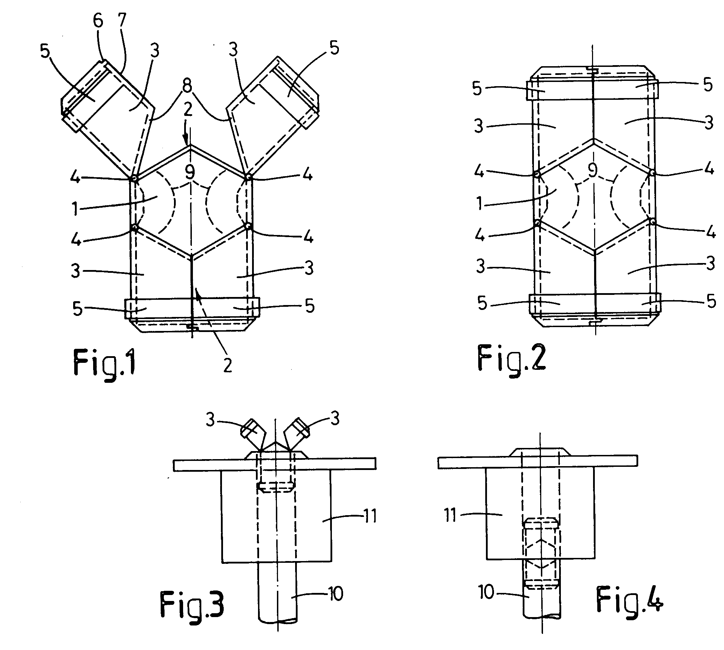

The cartridge for application in a pneumatic dispatch conduit system illustrated in fig. 1 comprises a basically hollow cylindrical body 1 with at both ends a closable access opening 2. Each access opening 2 is defined by two segments 3 which can pivot about pivot axes 4 which extend transversally to the longitudinal axis of the cylindrical body 1 and which are substantially tangent to the circumference thereof (in fig. 1 perpendicularly to the plane of the drawing).

Every segment 3 is pivotable about its respective pivot axis between a closure position (in fig. 1 shown by the segments 3 represented at the lower side) and an opening position (in fig. 1 shown by the segments 3 at the upper side). In the opening position the internal side of the cylindrical body 1 is accessible, such that objects can be applied therein or removed therefrom.

The segments 3 belonging to one and the same access opening 2 have, in the embodiment illustrated, each a semi-cylindrical shape. In the closure position the segments engage each other such that they in a way define an elongation of the cylindrical body 1.

At the pivot axis 4 not detailed represented spring elements, for example torsion springs, are applied which load the segments 3 towards the opening position. Therefore, for keeping the segments 3 in the closure position, an inwardly directed force has to be directed onto the outside of the segments.

At their ends facing away from the pivot axis 4 the segments 3 define a guiding ring 5 which, when the cartridge is positioned in a pneumatic dispatch conduit system, will engage the internal wall of the pneumatic dispatch conduit system. Such a guiding ring generally comprises a material having a low friction and sound absorbing capacities, such as felt. The dimensions of the guiding rings 5 are such that the segments 3, when the cartridge is received in the pneumatic dispatch conduit system, are maintained exactly in the closure position. This position is represented in fig. 2, in which the cartridge is fully closed. For bringing this closure position into perfection it is possible that the edges of the segments which in the closure position engage each other and/or engage the cylindrical body (for example in fig. 1 indicated with reference number 6, 7 and 8) are provided with a labyrinth sealing.

Further in fig. 1 internal clamping means 9, for example paper clips for bank notes, are represented. It is possible to activate these clamping means through the segments 3.

In fig. 3 part of a pneumatic dispatch conduit system 10 is represented, namely near to an end station 11. By means of provisions not shown in detail a cartridge according to the invention is kept in such a position that the segments 3 at the upper side can take in the opening position. In this position loading or unloading (manually or automatically) can occur. When next the cartridge, by means not shown further, is moved into the pneumatic dispatch conduit system 10 both segments 3 will pivot to the closure position about their respective pivot axis 4 and against the force of the spring means, such that the situation illustrated in fig. 4 is obtained in which the cartridge is fully closed and is being conveyed through the pneumatic dispatch conduit system.

For maintaining the cartridge in the position illustrated in fig. 3 abutment means may be applied, or driving belts known already, which are positioned relative to each other in a V-shape.

The invention is not limited to the embodiments described before, which can be varied widely within the scope of the invention, as defined by the appended claims.

## Claims

1. Cartridge for application in a pneumatic dispatch conduit system, with a basically hollow cylindrical body (1) comprising at at least one end a closeable access opening (2), and means (3) for closing said access opening (2) which are pivotable between a closure position and an opening position, **characterised** in that the means for closing said access opening (2) comprise at least one segment (3) of the surface of said body (1) which is pivotable between a closure position and an opening position, wherein means are provided in said body (1) for loading the segment (3) towards the opening position so that, when the part of the cartridge defined by the access opening (2) is free of the pneumatic dispatch conduit system (10), the segment (3) pivots towards its opening position.

2. Cartridge according to claim 1**, characterised** in that the at least one segment (3) is spring-loaded towards its opening position.

3. Cartridge according to claim 1 or 2, **characterised** in that the at least one segment (3) is pivotable about a pivot-axis (4) extending transversally to the longitudinal axis of the cylindrical body (1) and being substantially tangent to the circumference thereof.

4. Cartridge according to claim 1, 2 or 3 **characterised** in that the access opening (2) is provided with at least two segments (3) which, in the closure position, engage each other.

5. Cartridge according to claim 4**, characterised** in that the segments (3) together define a cylindrical shape.

6. Cartridge according to claim 4 or 5, **characterised** in that the edges (6, 7, 8) of the segments (3) which in the closure position engage each other and/or engage the cylindrical body (1) comprise a labyrinth sealing.

7. Cartridge according to one of the claims 1-6, **characterised** in that it comprises at both its ends an access opening (2) provided with at least one pivotable segment (3).

8. Cartridge according to one of the claims 1-7, **characterised**, in that it comprises at least one abutment means for defining the end position of the cartridge at an end of the pneumatic dispatch conduit system (10).

9. Cartridge according to one of the claims 1-8, **characterised** in that it comprises internal clamping means (9) for clamping objects to be received such as for example a paper clip for bank notes.

10. Cartridge according to claim 9, **characterised** in that the clamping means (9) can be activated by the at least one segment (3).

## Patentansprüche

1. Kassette zur Verwendung in einen pneumatischen Rohrpostsystem, mit einem im wesentlichen hohlen zylindrischen Körper (1), der wenigstens an einem Ende eine schließbare Einfüllöffnung (2) umfasst, und Mittel (3) zum Schließen der Einfüllöffnung (2), welche zwischen einer Schließposition und einer Öffnungsposition schwenkbar sind, dadurch gekennzeichnet, daß die Mittel zum Schließen der Einfüllöffnung (2) wenigstens einen Abschnitt (3) dar Oberfläche des Körpers (1) enthalten, der zwischen einer Schließposition und einer Öffnungsposition schwenkbar ist, wobei Mittel in dem Körper (1) zum Spannen des Abschnitts (3) in Richtung der Öffnungsposition vorgesehen sind, so daß der Abschnitt (3) in Richtung seiner Öffnungsposition schwenkt, wenn der durch die Einfüllöffnung (2) definierte Teil der Kassette von dem pneumatischen Rohrpostsystem (10) freigebeben ist.

2. Kassette nach Anspruch 1,
**dadurch gekennzeichnet, daß**
der wenigstens eine Abschnitt (3) in Richtung der Öffnungsposition federvorgespannt ist.

3. Kassette nach Anspruch 1 oder 2,
**dadurch gekennzeichnet, daß**
der wenigstens eine Abschnitt (3) um eine Schwenkachse (4), schwenkbar ist, die sich quer zur Längsachse des zylindrischen Körpers (1) erstreckt und im wesentlichen zu dessen Umfang ist.

4. Kassette ach Anspruch 1, 2 oder 3,
**dadurch gekennzeichnet, daß**
die Einfüllöffnung (2) wenigstens mit zwei Abschnitten (3) versehen ist, welche in der Schließposition miteinander in Kontakt gelangen.

5. Kassette nach Anspruch 4,
**dadurch gekennzeichnet, daß**
die Abschnitte (3) zusammen eine zylindrische Form definieren.

6. Kassette nach Anspruch 4 oder 5,
**dadurch gekennzeichnet, daß**
die Kanten (6, 7, 8) der Abschnitte (3), welche in der Schließposition miteinander und/ oder mit dem zylindrischen Körper (1) in Kontakt gelangen, einen Labyrinth-Verschluß aufweisen.

7. Kassette nach einem der Ansprüche 1-6,
**dadurch gekennzeichnet, daß**
sie an ihren beiden Enden eine Einfüllöffnung aufweist, die mit wenigstens einem schwenkbaren Abschnitt (3) versehen ist.

8. Kassettenach einem der Ansprüche 1-7,
**dadurch gekennzeichnet, daß**
sie wenigstens ein Widerlager zum Definieren der Endposition der Kassette an einem Ende des pneumatischen Rohrpostsystems (10) aufweist.

9. Kassette nach eine der Ansprüche 1-8,
**dadurch gekennzeichnet, daß**
sie eingebaute Klemmittel (9) zum Festklemmen von Objekten aufweist, die aufgenommen wegen sollen, beispielsweise einen Papierhalter für Banknoten.

10. Kassette nach Anspruch 9,
**dadurch gekennzeichnet, daß**
die Klemmittel (9) durch den wenigstens einen Abschnitt (3) aktiviert werden.

## Revendications

1. Cartouche pour l'application dans un système de conduit à distribution pneumatique, ayant un corps (1) cylindrique essentiellement creux comprenant à au moins une extrémité une ouverture (2) d'accès obturable, et des moyens (3) pour fermer ladite ouverture (2) d'accès, lesquels moyens sont pivotables entre une position de fermeture et une position d'ouverture, caractérisée en ce que les moyens pour fermer ladite ouverture (2) d'accès comprennent au moins un segment (3) de la surface dudit corps (1) qui est pivotable entre une position de fermeture et une position d'ouverture, dans laquelle des moyens sont prévus dans ledit corps (1) pour charger le segment (3) vers la position d'ouverture de sorte que, lorsque la partie de la cartouche définie par l'ouverture (2) d'accès est libre par rapport au système (10) de conduit à distribution pneumatique, le segment (3) pivote vers sa position d'ouverture.

2. Cartouche selon la revendication 1, caractérisée en ce qu'au moins un segment (3) est chargé par ressort vers sa position ouverte.

3. Cartouche selon la revendication 1 ou 2, caractérisée en ce qu'au moins un segment (3) est pivotable autour d'un axe de pivot (4) s'étendant transversalement par rapport à l'axe longitudinal du corps cylindrique (1) et étant essentiellement tangentiel à la circonférence de celui-ci.

4. Cartouche selon la revendication 1, 2 ou 3, caractérisée en ce que l'ouverture (2) d'accès est pourvue d'au moins deux segments (3) qui, dans la position de fermeture, s'engagent l'un à l'autre.

5. Cartouche selon la revendication 4, caractérisée en ce que les segments (3) définissent ensemble une forme cylindrique.

6. Cartouche selon la revendication 4 ou 5, caractérisée en ce que les bords (6, 7, 8) des segments (3), qui s'engagent l'un à l'autre et/ou s'engagent avec le corps cylindrique (1) dans la position de fermeture, comprennent un scellage en labyrinthe.

7. Cartouche selon l'une des revendications 1 à 6, caractérisée en ce qu'elle comprend à chacune de ses extrémités une ouverture (2) d'accès pourvue d'au moins un segment pivotable (3).

8. Cartouche selon l'une des revendications 1 à 7, caractérisée en ce qu'elle comprend au moins un moyen de butée pour définir la position extrême de la cartouche à une extrémité du système (10) de conduit à distribution pneumatique.

9. Cartouche selon l'une des revendications 1 à 8, caractérisée en ce qu'elle comprend des moyens de blocage (9) internes pour bloquer des objets à recevoir tels qu'une attache trombone pour billets de banque.

10. Cartouche selon la revendication 9, caractérisée en ce que les moyens de blocage (9) peuvent être activés par ledit au moins un segment (3).
